Europäisches Patentamt

(19) European Patent Office

Office européen des brevets

(11) **EP 0 949 143 A2**

(12) **EUROPEAN PATENT APPLICATION**

(43) Date of publication:
**13.10.1999 Bulletin 1999/41**

(51) Int. Cl.$^6$: **B64G 1/22**, B64G 1/36, G05D 1/08

(21) Application number: **99107021.0**

(22) Date of filing: **09.04.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.04.1998 US 58604**

(71) Applicant:
**Laser Communications International, L.L.C.
Boulder, Colorado 80301 (US)**

(72) Inventors:
• **Malarky, Alastair
Lafayette, Colorado 80026 (US)**

• **Gore, Joseph
Cambridge, Ontario N1T 1M3 (CA)**
• **Sarto, Anthony
Boulder, Colorado 80303 (US)**
• **Chen, Weiguo
Cambridge, Ontario N1T 1G2 (CA)**

(74) Representative:
**Winter, Brandl & Partner
Patent- und Rechtsanwaltskanzlei
Alois-Steinecker-Strasse 22
85354 Freising (DE)**

(54) **Method and apparatus for improved attitude determination of spacecraft**

(57) A method and apparatus is disclosed for improving the determination of the attitude of a spacecraft and to improve the acquisition time of inter-satellite links. A predicted link vector is established between a first spacecraft and a second spacecraft, preferably by measuring the difference in predicted position coordinates between the spacecraft. A measured link vector is derived by establishing a communication signal beam between the spacecraft. The predicted and measured link vectors are compared to determine the amount of attitude offset in the first spacecraft. This method can provide more accurate attitude data than is available for attitude sensors. Additionally, again using measured and predicted link vectors, acquisition link vector generation is made to be independent of the dynamic attitude motions of the spacecraft, thereby improving acquisition time.

Figure 2 : Spacecraft Relationships

## Description

BACKGROUND OF THE INVENTION

The present invention is directed to the field of attitude sensing and Inter-Satellite link ("ISL") acquisition for a spacecraft, such as a communications satellite. In recent years there has been a trend in space-based communication systems to provide a plurality of satellites or "constellation," operated cooperatively in non-geostationary orbits and linked together by ISLs that can operate at RF, microwave or optical wavelengths, as required for the specific application. The "Iridium" system, manufactured by Motorola, Inc., is such a system currently being commissioned in orbit, while several other systems are in development, e.g., Teledesic and Celestri. In these satellite constellations, each satellite in the system communicates to a plurality of other satellites using ISLs. Thus, each satellite must be able to simultaneously point its ISL terminals and acquire ISL signals from a plurality of other satellites.

ISL pointing and acquisition on spacecraft is typically determined with respect to the spacecraft velocity vector, corrected for spacecraft attitude offsets and ISL terminal alignment to the spacecraft velocity vector. In ISL pointing, it is very important to have accurate knowledge of the spacecraft attitude, i.e., the spacecraft roll, pitch and yaw rotation angles with respect to the spacecraft velocity vector. In a typical previous application, the ISL beam-width is significantly larger than the uncertainty in the spacecraft attitude and the ISL terminal alignment, and therefore ISL pointing can be operated in an "open-loop" mode. In this open-loop mode, each spacecraft points one or more ISL terminals using purely predictive data, i.e., based on predicted knowledge of the position of the spacecraft, the predicted position of the target spacecraft at which the ISL beam is to point and predicted knowledge of the changing attitude of the spacecraft and the alignment of the ISL terminal to a standard coordinate reference.

In these previous applications, spacecraft are operated as independent entities, each determining their attitude through the use of on-board attitude sensors, such as sun-sensors, star-trackers, and earth horizon (limb) sensors. Attitude knowledge at the sensor locations to 0.1 degree in each axis (roll, pitch, and yaw) is typically achievable with such sensor systems at significant cost but, when combined with physical distortions and motions of the spacecraft, larger uncertainties in the ISL pointing knowledge result.

Greater precision in attitude determination and pointing is required for the latest-generation satellite constellations. Increasing demand for higher communication data rates drives the need for shorter operating wavelengths and high gain (narrow beam) ISLs. Increased pointing accuracy becomes the dominant consideration in realizing the feasibility of high gain ISLs, and increasingly precise attitude estimates are required. Accurate estimates of attitude knowledge require more expensive sensors systems. Such sensors are active continuously, drawing power from the spacecraft, thus requiring an increase in on-board power consumption. Further, as ISL beam-widths reduce, there is a point where the spacecraft attitude uncertainty is a significant fraction of the ISL beam-width. Beyond this, a further point is reached where spacecraft vibrations and motion transients due to mechanisms and thrusters on the spacecraft become significant issues for ISL pointing.

These problems are of particular concern when optical wavelengths are used to establish the ISLs. Next generation satellite constellations such as Teledesic and Celestri require optical wavelength ISLs in order to support the high data rates required for communication networks established by the constellation (as compared with Iridium, which uses RF ISLs.) Optical ISLs generally operate with a beam-width of less than 0.01 degrees, therefore optical ISLs must be operated in a "closed-loop" mode, i.e., where a tracking circuit in the ISL terminal tracks the incoming receive signal and feeds this to the pointing controller to steer both transmit and receive beams. Once a link is established between two ISL terminals, they can generally maintain the link using the tracking system. This tracking system compensates for spacecraft platform disturbances without specific knowledge of the spacecraft attitude, requiring only the knowledge of the relationships between spacecraft on which the terminals reside in order to correct for transmit-receive pointing differences resulting from relative motion between the platforms (i.e., point-ahead information).

However, during the acquisition phase, when the link is initially established between the two spacecraft, attitude and spacecraft relationship data are important since the ISL terminals are controlled open-loop until the link is established. In many cases this acquisition phase is performed by scanning a beam over a field of uncertainty ("FOU"), which is a search area equal to the pointing uncertainty including, and normally dominated by, the uncertainty of the spacecraft attitude. The acquisition time (i.e. the time to establish the link between the two spacecraft) will at a minimum increase linearly with the area of the FOU. Also, if the attitude changes during the acquisition process, or if spacecraft vibrations or transients are significant with respect to the transmit beam-width, the probability of acquiring the link will decrease, or at least the acquisition time will significantly increase. In many applications, acquisition probability and time are important, particularly in a constellation that includes conditions where spacecraft links are dynamically changing between numerous spacecraft in a rapid manner. Thus, issues related to increased ISL pointing accuracy are becoming paramount to the space network's functionality.

Attitude knowledge for spacecraft in these new constellations, is also of significance in the pointing of the primary spacecraft communication antenna (that communicates with a ground station on earth). In order to carry the high volumes of data traffic proposed for these spacecraft, the primary communication antenna forms many narrow high-gain beams, thus permitting frequency re-use and cost-effective user (ground) terminals. Attitude knowledge errors also affect the pointing of these narrow beams.

BRIEF DESCRIPTION OF THE INVENTION

In view of the above-noted difficulties and drawbacks and others associated with previous systems, there is therefore a need for a method of providing highly accurate and stable attitude data for a spacecraft;

There is also a need for narrower beams in primary communication;

There is also a need for improved stabilization and/or improved knowledge of stabilization of the spacecraft body or antenna platform;

There is also a need for reducing reliance of on-board attitude sensors;

There is also a need for a scheme that is highly insensitive to attitude drifts, transients and vibrations during ISL signal acquisition;

There is also a need for reducing attitude data from the spacecraft during ISL signal acquisition;

There is also a need for reducing acquisition time for ISLs within a constellation of ISL-linked spacecraft.

These needs and others are satisfied by the method and apparatus of the present invention for determining the attitude of a spacecraft. A first ISL link between a first spacecraft and any other spacecraft is established in an open-loop manner using the predicted orbital data for the spacecraft, with on-board attitude sensors determining the spacecraft attitude. A link vector is measured by the ISL terminal on the first spacecraft and a difference formed with an open-loop predicted vector to provide a more accurate measure of the attitude of the first spacecraft. To establish a second link from the first spacecraft, the spacecraft employs this measure to enhance the data from the attitude sensors, thereby reducing its attitude error, FOU, and hence the acquisition time for the second and subsequent links. Any subsequent links to be formed from the first spacecraft after the second link is established do not require spacecraft attitude data from the sensors, since the spacecraft attitude errors can be compensated entirely using the measured data on the established links. Further, where multiple links are established from a spacecraft, the attitude data determined by comparing predicted and actual pointing of each of the links are employed to provide highly accurate attitude data to the spacecraft.

As will be appreciated, the invention is capable of other and different embodiments, and its several details are capable of modifications in various respects, all without departing from the invention. Accordingly, the drawings and description are to be regarded as illustrative in nature and not restrictive.

BRIEF DESCRIPTION OF THE DRAWINGS

Fig. 1 is a block diagram showing a single ISL terminal as according to the present invention.
Fig. 2 shows the positional relationships of two spacecraft in orbit linked by an ISL, as according to the present invention.
Fig. 3 illustrates the coordinate transform relationship performed with the present invention.
Fig. 4 depicts the spacecraft relationships for ISL signal acquisition, as according to the present invention.
Fig. 5 depicts the beam and field of view relationships for the ISL acquisition phase.
Fig. 6 shows the new coordinate system derived with the present invention for improved acquisition.
Fig. 7 is a flow chart showing the computer-implemented method steps of employing the ISL terminal for attitude determination of the spacecraft as according to the present invention.
Fig. 8 is a flow chart showing the computer-implemented method steps of controlling the ISL terminal in the acquisition phase as according to the present invention.

DETAILED DESCRIPTION OF THE INVENTION

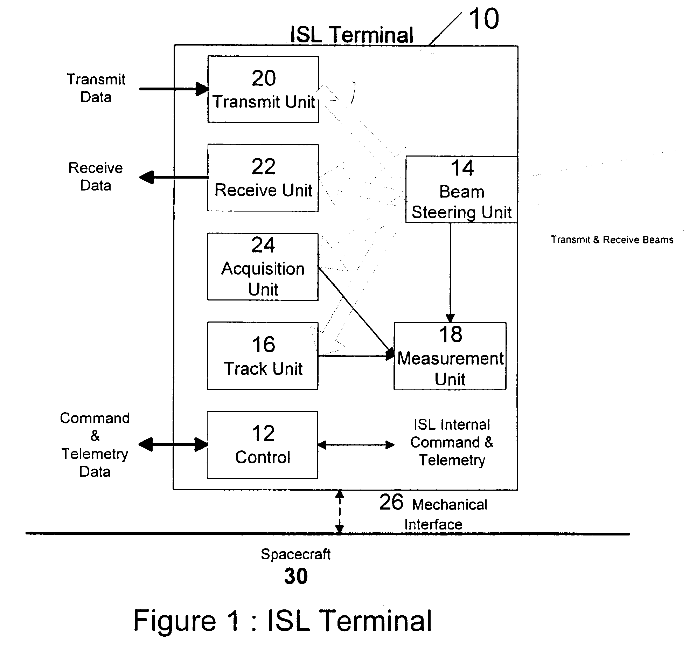

A closed-loop tracking ISL terminal 10 as according to the present invention is shown in Fig. 1. The terminal 10 includes a control unit 12, preferably a computer or embedded micro-processor device, for controlling the ISL functions via programmed computer software instructions that are preferably stored in a non-volatile memory device, such as an EPROM, EEPROM or Flash ROM. A steering unit 14 is provided containing mechanisms (e.g., active optics) or other means for steering the outgoing transmit beam and the incoming receive beam at respective desired pointing angles. A track unit 16 is used to monitor direction of the incoming receive beam from a remote terminal and provide pointing corrections to the steering mechanisms. The steering unit 14 and track unit 16 are linked to a measurement unit 18 that measures the actual pointing angles of the terminal 10 referenced to the terminal coordinate system. A transmit unit 20 emits the communication data and acquisition/track optical beam(s) as an outgoing transmit beam from the terminal 10 in a direction linked to the direction of incidence determined by the track unit 16, so as to establish an inter-satellite link. A receive unit 22 recovers the communication data from the incoming signal along the ISL received by the ISL terminal receive beam. An acquisition unit 24 is used to initially detect signals incoming on the receive beam and determine the correct pointing angles for the terminal 10 to establish the ISL. A mechanical interface 26 is used to connect the terminal 10 to the spacecraft 30, to which the pointing angles can be referenced. The spacecraft 30 can support a plurality of such ISL terminals 10. The mechanical relationship between the terminals 10 and their respective mechanical interfaces 26 are accurately known, so as to provide a reference frame for determining positional information of the spacecraft. In one aspect of the invention, one or more of the ISL terminals may be used to provide attitude data.

A method of accurately determining the attitude of a spacecraft is provided by the present invention. With the present method, knowledge of the spacecraft attitude is derived from a measurement of the actual pointing angle of the ISL terminals connecting the spacecraft with other spacecraft, and comparing these measured angles with the predicted pointing angles for the link vectors between the spacecraft. The differences between the predicted and measured link vectors as referenced to the spacecraft coordinate system provide a more accurate measure of the attitude offset of the spacecraft.

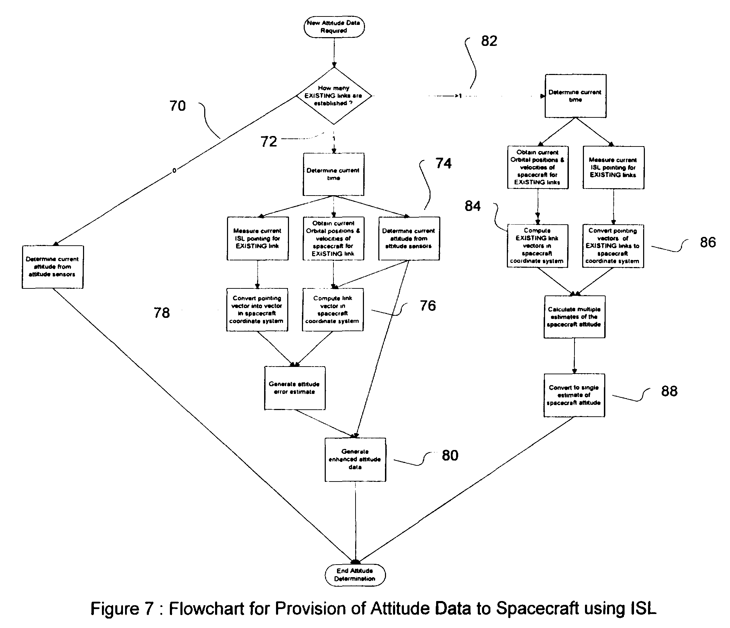

The attitude data provided by the ISL terminals are determined by computer-implemented steps that are preferably carried out by on-board computers, such as in the terminal 12 or in the spacecraft itself, under software control. When the spacecraft requires a determination of attitude, as may occur regularly for attitude control or primary communication antenna pointing, the computer sequence as shown in Fig. 7 is employed. The sequence shown is exemplary and alternative sequences satisfying the same functions are within the scope of this invention. In previous systems, and in the case of a first link for a spacecraft in the current system, the path 70 is followed. Here the spacecraft obtains its attitude data from computer-processing of the multiple on-board attitude sensors.

In the practice of this invention, when the spacecraft currently has one ISL link established, the computer sequence 72 is followed. In addition to obtaining attitude data from the on-board sensors 74, the computer computes a predicted link vector 76 and also obtains a measured link vector 78 from the ISL terminal supporting the link. It then compares these link vectors to obtain an estimate of the residual attitude error which is then used to provide a more accurate attitude estimate 80.

In further practice of this invention, when the spacecraft currently has more than one ISL link established, the computer sequence 82 is followed. For this sequence obtaining and using attitude data from the on-board sensors is optional and is not exercised in the preferred implementation. The computer computes predicted link vectors 84 for each of the established links and also obtains measured link vectors 86 from the ISL terminals supporting the links. Each pair of measured and predicted link vectors is then compared to obtain an estimate of the attitude. These estimates of attitude are then combined to produce a more accurate attitude estimate 88.

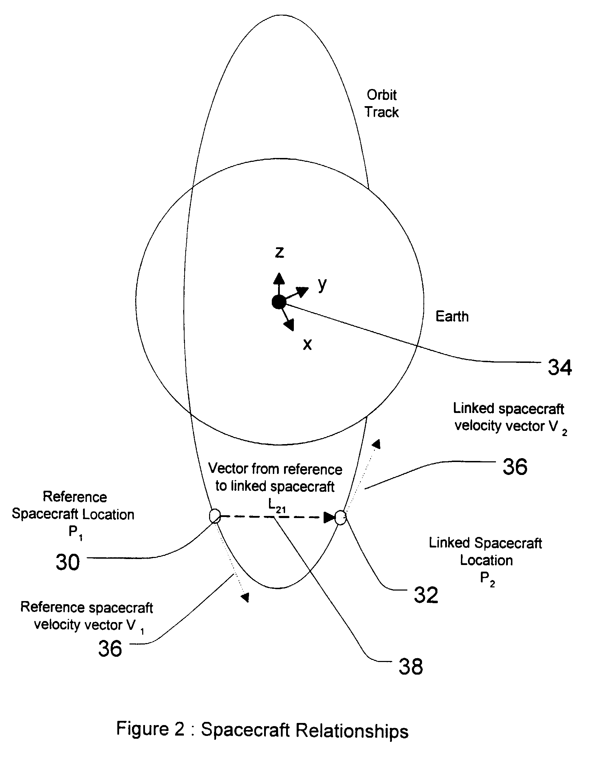

The derivation of the present computer-implemented method follows herewith. Figure 2 illustrates two spacecraft 30 and 32 orbiting around the earth. Each spacecraft 30, 32 is actually located at an instant in time t at some location $\vec{P}_i$ defined in a cartesian coordinate system $(\hat{x}, \hat{y}, \hat{z})$ referenced to a remote coordinate reference, typically the Earth-center 34. Each spacecraft is also moving along a velocity vector $\vec{V}_i$ 36 at that same time instant, defined in that same coordinate system, such that:

$$\vec{P}_i = P\ (x_i, y_i, z_i, t)$$

$$\vec{V}_i = \dot{\vec{P}}_i$$

i.e. the temporal derivative of location

The actual pointing vector from spacecraft 30 to spacecraft 32 is described in the same coordinate system by the link vector $\vec{L}_{21}$ 38:

$$\vec{L}_{21} = \vec{P}_2 - \vec{P}_1$$

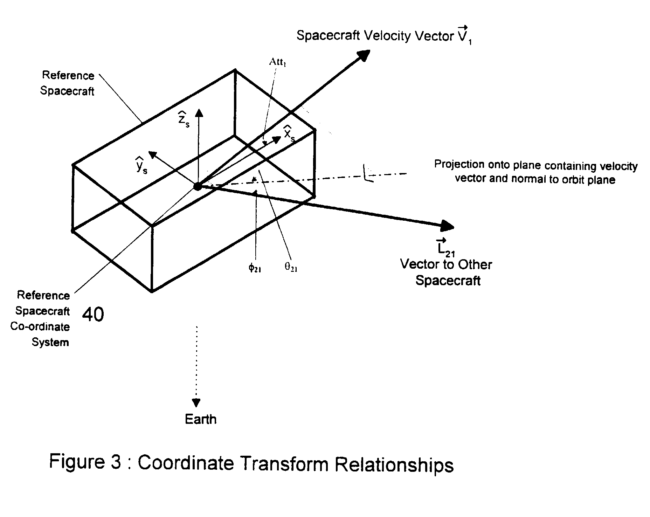

As shown in Fig. 3, each spacecraft 30, 32 generally maintains a coordinate system of its own referenced to its physical axes $(\hat{x}_s, \hat{y}_s, \hat{z}_s)$, to which the mechanical interface 26 of the ISL terminal 10 is referenced. Each spacecraft orients its physical axes over time to maintain its coordinate system in a known alignment relationship (its attitude) with the spacecraft velocity vector 36, within some error bound determined by the spacecraft attitude sensor suite. In the absence of errors, the link vector can be re-defined in the spacecraft's 30 coordinate system 40 as :

$$\vec{S}_{21} = \mathbf{A} \cdot \mathbf{S} \cdot \vec{L}_{21}$$

$$\mathbf{S} = f\,(\vec{V}_1)$$

$$\mathbf{A} = g(Att_1)$$

where :

$\vec{S}_{21}$ is the revised form of the link vector $\vec{L}_{21}$ defined in spacecraft 30's coordinate system 40.

**S** is an orthogonal transformation matrix that converts from the earth-centered coordinate system 34 to the ideal spacecraft 30 coordinate system in the absence of any attitude offset, and is a function of spacecraft 30 velocity vector $\vec{V}_1$.

**A** is an orthogonal transformation matrix that converts from the ideal spacecraft coordinate system to the true spacecraft 30 coordinate system 40 and is a function of the spacecraft 30 attitude offset $Att_1$.

The link vector can be expressed either in spacecraft cartesian ($\hat{x}_s$, $\hat{y}_s$, $\hat{z}_s$) or spacecraft spherical ($R_s$, $\theta_s$, $\phi_s$) coordinates as shown in FIG. 3 where :

$R_s$ is the range (distance) between the spacecraft 30, 32.

$\theta_s$ is the azimuth angle, the angle between the velocity vector $V_1$ (nominally the spacecraft x-axis) and the projection of the link vector $\vec{L}_{21}$ onto the plane containing the both the velocity vector and the normal to the orbit plane.

$\phi_s$ is the elevation angle, the angle between the link vector $\vec{L}_{21}$ and its projection onto the plane containing the both the velocity vector and the normal to the orbit plane.

In addition to the spacecraft coordinate system, each ISL terminal 10 generally maintains a spherical coordinate system of its own referenced to its mechanical interface 26 with the spacecraft. The relationship between the pointing vector of the ISL terminal 10 on spacecraft 30 in the ISL terminal coordinate system and the link vector relating the two spacecraft, 30, 32, defined in the spacecraft coordinate system is given by :

$$\vec{T}_{21} = \mathbf{B} \cdot \vec{S}_{21}$$

where:

$\vec{T}_{21}$ is the ISL terminal pointing vector defined in the ISL terminal coordinate system.

**B** is an orthogonal transformation matrix which converts from spacecraft 30 coordinate system 40 to the ISL terminal 10 coordinate system.

Thus there exists a known relationship between the ISL terminal 10 pointing vector in the terminal coordinate system and the link vector in the earth centered coordinate system:

$$\vec{T}_{21} = \mathbf{B} \cdot \mathbf{A} \cdot \mathbf{S} \cdot \vec{L}_{21}$$

Since the transformation matrices are orthogonal matrices, if the ISL terminal pointing vector $\vec{T}_{21}$ is known the relationship can be used to solve for **A** and hence the spacecraft attitude :

$$(\mathbf{B}^{-1} \cdot \vec{T}_{21}) = \mathbf{A} \cdot (\mathbf{S} \cdot \vec{L}_{21}) \text{ which has the form } \vec{X} = \mathbf{A} \cdot \vec{Y}$$

$$g^{-1}(\mathbf{A}) = Att_1$$

The previous formulae assumes an ideal, error-free, system. However in the traditional open-loop ISL pointing based on attitude sensors, the prediction of the ISL pointing vector is subject to the following errors :

1. The locations of the two spacecraft will not be predicted exactly by spacecraft 30 resulting in an error $\Delta\vec{L}_{21}$ in the prediction of the link vector $\vec{L}_{21}$.

2. Spacecraft 30 will not have exact knowledge of its true velocity vector which will result in a velocity error $\Delta\vec{V}_1$ and hence resulting in an error $\Delta\mathbf{S}$ in the prediction of the transform matrix $\mathbf{S}$.

3. Spacecraft 30 will not have exact knowledge of its coordinate axes alignment with the predicted velocity vector, resulting from the attitude errors $\Delta Att_1$ of the attitude sensors and which will result in an error $\Delta\mathbf{A}$ in the prediction of the transform matrix $\mathbf{A}$.

4. The relationship between the spacecraft 30 coordinate system 40 and the terminal mechanical interface 26 may be in error due to structural distortions resulting in an error $\Delta\mathbf{B}$ in the prediction of the transform matrix $\mathbf{B}$.

5. The ISL terminal 10 may have internal errors in its achieved pointing vector compared to its pointing vector command with respect to its mounting interface 26 due to internal mechanical and measurement effects resulting in an error in the actual pointing vector of $\Delta\vec{T}_{21}$ with respect to the commanded pointing vector.

Thus the achieved pointing vector $\vec{T}^{\Delta}_{21}$ resulting from the open-loop command is given by :

$$\vec{T}^{\Delta}{}_{21} = (\mathbf{B} + \Delta\mathbf{B}) \cdot (\mathbf{A} + \Delta\mathbf{A}) \cdot (\mathbf{S} + \Delta\mathbf{S}) \cdot (\vec{L}_{21} + \Delta\vec{L}_{21}) + \Delta\vec{T}_{21}$$

Note that the dominant error term between the achieved pointing vector $\vec{T}^{\Delta}_{21}$ and the required pointing vector $\vec{T}_{21}$ is normally $\Delta\mathbf{A}$, i.e. from the spacecraft attitude knowledge error.

In practice of the attitude determination aspect of the present invention, an actual ISL link (i.e. a communication beam) connects the two spacecraft 30, 32, and the ISL terminal 10 on spacecraft 30 is used to measure its pointing angles for the actual link with respect to its mechanical interface 26 with the spacecraft 30, providing the true pointing vector $\vec{T}_{21}$ with some measurement error. When this is used to solve for the spacecraft attitude some of the previous prediction errors also apply. The errors involved are : :

1. The locations of the two spacecraft will not be predicted exactly by spacecraft 30 resulting in an error $\Delta\vec{L}_{21}$ in the prediction of the link vector $\vec{L}_{21}$.

2. Spacecraft 30 will not have exact knowledge of its true velocity vector which will result in a velocity error $\Delta\vec{V}_1$ and hence an error $\Delta\mathbf{S}$ in the prediction of the transform matrix $\mathbf{S}$.

3. The relationship between the spacecraft 30 coordinate system 40 and the terminal mechanical interface 26 may be in error due to structural distortions resulting in an error $\Delta\mathbf{B}$ in the prediction of the transform matrix $\mathbf{B}$.

4. The ISL terminal 10 may have internal errors in its measurement of the achieved pointing vector with respect to its mounting interface 26 due to internal mechanical and measurement effects resulting in an error in the measured pointing vector of $\Delta^{\Psi}\vec{T}_{21}$ with respect to the actual vector $\vec{T}_{21}$.

Thus the estimated value for attitude contains some error $\Delta^{\Psi}Att_1$ :

$$((\mathbf{B} + \Delta\mathbf{B})^{-1} \cdot (\vec{T}_{21} - \Delta^{\Psi}\vec{T}_{21})) = (\mathbf{A} + \Delta^{\Psi}\mathbf{A}) \cdot ((\mathbf{S} + \Delta\mathbf{S}) \cdot (\vec{L}_{21} + \Delta\vec{L}_{21}))$$

$$g^{-1}(\mathbf{A} + \Delta^{\Psi}\mathbf{A}) = Att_1 + \Delta^{\Psi}Att_1$$

Since the error contributors in this formulation are generally smaller than the errors from the on-board attitude sensors, the derived attitude estimate is more accurate, i.e. $\Delta^{\Psi} Att_1 < \Delta Att_1$.

Thus, attitude is derived from a measurement of the pointing angle of the ISL from spacecraft 30 to spacecraft 32 and converting it to a vector referenced to the coordinate system 40 defined by the spacecraft 30, and using the comparison between the predicted vector determined by spacecraft 30 and the measured vector within this coordinate system 40 as a measure of the attitude offset of the spacecraft. This attitude data can be used to enhance the attitude accuracy of the data from the on-board attitude sensors and, if more than one ISL link is established, permit the spacecraft to turn off other attitude sensors, or to operate with lower accuracy sensors once the ISL link is established. The enhanced attitude knowledge in turn permits the use of narrower beam primary communication antennas and permits improved stabilization of the entire spacecraft or an antenna platform.

In general, the rate of change of the above error contributors in the attitude estimate is slow in comparison to attitude motions, especially those caused by transient events on the spacecraft, such as motion of solar arrays. Further, the dominant residual error terms will initially be those related to spacecraft orbit dynamics and spacecraft orbit knowledge, which can be reduced over time. In contrast, attitude control and knowledge degrades with time since attitude sensor performance degrades over the mission lifetime. Further, the accuracy of the attitude provided by this invention can be further enhanced if the spacecraft 30,32 have location determining sensors such as GPS or accurate ground tracking data. By sharing the location data across the ISL, the errors $\Delta\vec{L}_{21}$ and $\Delta\vec{V}_1$ can be minimized. Further, if spacecraft 30 has other ISL links with spacecraft other than spacecraft 32, it can be seen that there will be multiple estimates of the attitude ($Att_1 + \Delta^\Psi Att_1$) available, and by combining these multiple estimates the error bound on the resulting attitude estimate will be reduced.

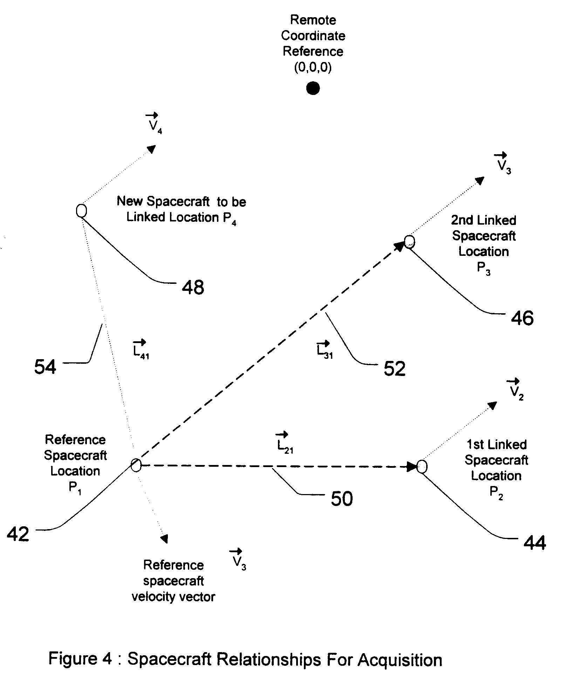

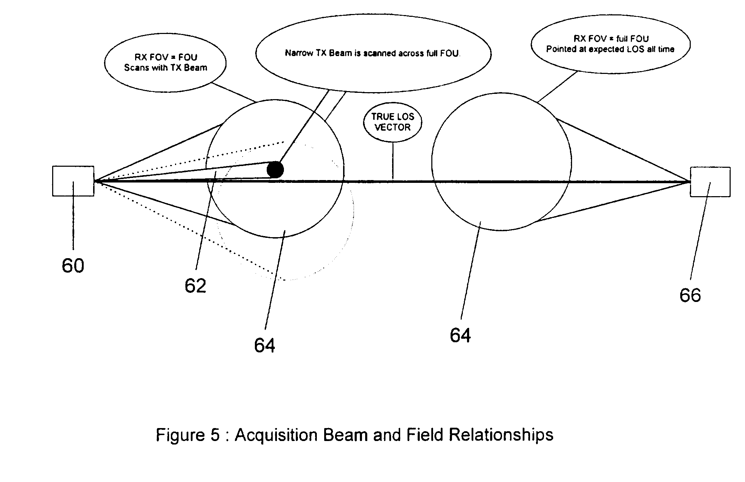

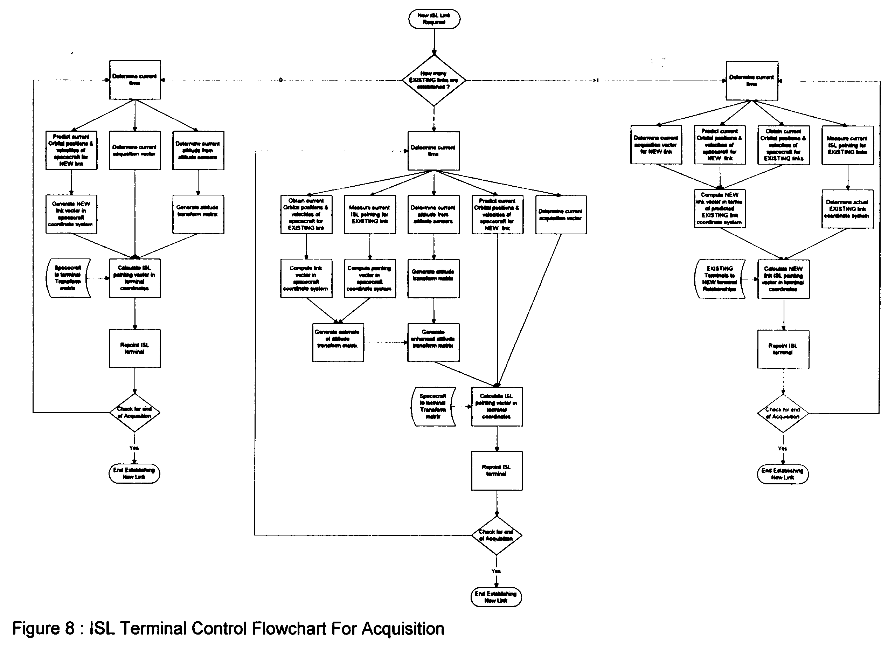

In another aspect of the invention, for which the computer sequence is shown in FIG. 8, it can be shown that the presence of multiple ISL links from a spacecraft 30 permits the acquisition process to be less sensitive to spacecraft attitude offsets, errors and attitude changes with time, including low frequency vibrations and transients. As shown in FIG. 4, a spacecraft 42 has ISL links 50, 52 with multiple spacecraft 44, 46, and requires to initiate a new ISL link with a previously unconnected spacecraft 48. Nominally the link to spacecraft 48 lies on a vector 54. The acquisition process is preferably a scanning process as shown in FIG. 5 where one ISL terminal 60 on the first spacecraft scans a beam 62 over the field of uncertainty 64 with the intention that it will be detected by the ISL terminal 66 on another spacecraft. Both ISL terminals 60, 66 have an acquisition field of view equal to, or greater than, the field of uncertainty 64.

In previous systems, this process would require the system commanding the acquisition to operate the ISL terminal 60 independently of other ISL terminals on the same spacecraft and the system would provide an estimated open-loop pointing vector, as previously described, determined with respect to the spacecraft velocity vector, and corrected for the known relationship between the ISL terminal mounting interface and the spacecraft velocity vector and for the spacecraft attitude as measured by spacecraft attitude sensors. However, the spacecraft attitude will be dynamically perturbed by small vibrations and transients, creating errors in attitude knowledge. Also, the knowledge of the terminal alignment to the spacecraft velocity vector may be in error, especially if spacecraft distortion occurs. This process requires that the field of uncertainty encompass: (i) the error in the attitude knowledge; i.e. the relationship between the velocity vector and the spacecraft coordinate system; (ii) the error in the knowledge of the terminal alignment error to the spacecraft coordinate system; (iii) the error in the knowledge of the spacecraft velocity vector in the earth centered coordinate system; (iv) the error in the knowledge of the spacecraft locations in the earth centered coordinate system; and (v) the errors within the terminal with respect to its mounting interface.

Consequently, the scanning beam-width and scan pattern must take account of, as a minimum: the attitude resolution and accuracy available; the dynamic change in the error from the true attitude; the level of vibration and transients; and changing spacecraft distortions. These result in stringent requirements on attitude accuracy and spacecraft stability that constrain the acquisition scan beam-width and pattern. In addition, since the ISL open-loop pointing vectors in such previous systems are dependent on the current attitude of spacecraft 42 which is a non-predictable function over time due to vibrations and transients, the ISL pointing vector to spacecraft 48 must be updated in real-time during acquisition. While previous systems are not adequate for these demands, the present invention is well suited for handling these requirements.

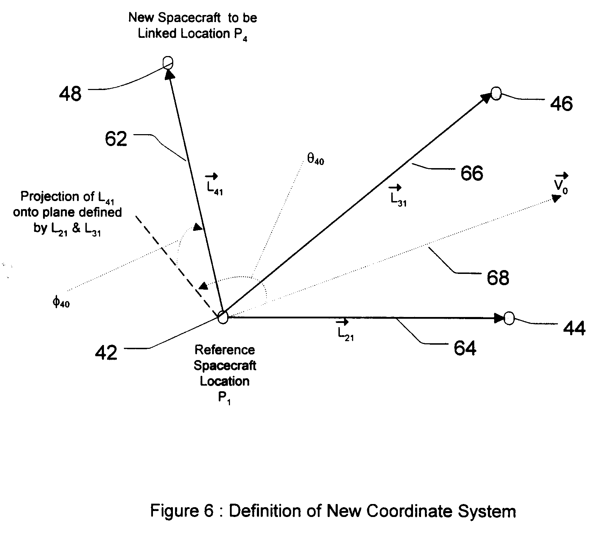

Using the present method, the required pointing vector is defined in terms of the relationship between the predicted vector to spacecraft 48 and the predicted vectors to spacecraft 44 and 46, which are already linked to spacecraft 42. Thus the new vector 54 is predicted referenced to a link coordinate system defined by the existing links 50, 52. The relationship between the links can be predicted in the earth-centered coordinate system, i.e. without requiring knowledge of the spacecraft attitude. The actual link vectors from spacecraft 42 for links 50, 52 to spacecraft 44, 46 are then measured by the ISL terminals and converted to the spacecraft coordinate system, or some other reference coordinate system which is common to all the ISL terminals, and used to relate the link coordinate system and the reference coordinate system. The pointing commands for terminal 60 are then determined in the reference coordinate system by applying the known (predicted) relationship to the true (measured) pointing vectors. Since the transformations from the earth-centered coordinate system to this reference coordinate system only involve rotations (orthogonal matrix transforms) the angular relationship between the link vectors will remain unchanged after such transformations, i.e. the relationships within the link coordinate system are not affected. The preferred link coordinate system is defined as shown in Fig. 6, where the link vector 62 (derived from vector 54) to spacecraft 48 is defined referenced to a plane in which lie both existing link vectors 64, 66 (derived from link vectors 50, 52). The preferred zero angle vector $\vec{V}_0$ 68 is defined in the plane as the vector lying midway between the two link vectors 64, 66.

Since we have defined the link vectors in a coordinate system with respect to the predicted link vectors, it follows that the coordinate system which is created by employing the measured link vectors is dependent on the errors :

1. The locations of the spacecraft 44, 46 not being predicted exactly by spacecraft 42 resulting in an error in the prediction of the link vectors $\vec{L}_{21}$ and $\vec{L}_{31}$ 50, 52.
2. The knowledge of the relationships between the ISL terminal coordinate systems may be in error due to structural distortions resulting in errors in the correction of the measured data for links 50, 52.
3. The ISL terminals may have internal errors in measuring their actual pointing vector with respect to their mounting interface 26 due to internal mechanical and measurement effects resulting in errors in the measurements of the pointing vectors for links 50, 52.
    The subsequent commands to the ISL terminal to be linked will then have the further errors :
4. The location of the spacecraft 48 not being predicted exactly by spacecraft 42 resulting in an error in the prediction of the link vector $\overline{L}_{41}$ 54.

5. The knowledge of the relationship between the ISL terminal coordinate system may be in error due to structural distortions resulting in an error in the conversion of the pointing commands to the ISL terminal used for link 54.

6. The ISL terminal may have internal errors in controlling its actual pointing vector with respect to its mounting interface 26 due to internal mechanical and measurement effects resulting in errors in the achieved pointing vector for link 54.

None of these error terms are rapidly changing errors nor are they significantly sensitive to attitude offset or vibrations or transients, nor to the knowledge of the spacecraft velocity vector and hence the formulation of the new coordinate system is an accurate means of tracking the attitude and velocity over time without requiring accurate measurement of the attitude.

Hence, the new coordinate system will be stable during the acquisition process. Therefore requirements on the acquisition scanning beam-width and pattern as well as on the attitude accuracy required from the spacecraft and on the tolerable level of vibration and transients are relaxed substantially with the present method.

If the mechanical relationship between the ISL terminals on spacecraft 42 is known and fixed, the accuracy of the knowledge of the relationship between their mounting interfaces and the spacecraft coordinate reference is immaterial, eliminating the impacts of spacecraft distortion. The ISL terminals can thus share a common mechanical interface 26 with the spacecraft and can all be rigidly mounted to this common interface. The interface can further be compliantly attached to the spacecraft, allowing passive damping isolation of high-frequency micro-vibration from the spacecraft and reducing tracking constraints on the ISL terminal.

With the present invention, a number of the errors contributing to the field of uncertainty have been eliminated for spacecraft 42, in particular the dominant term of attitude uncertainty. Thus, the required search area for the scanning pattern can be reduced, improving the acquisition time since the dominant duration in the acquisition process is the time required for open-loop scanning across the FOU. Further, since the relationship is no longer dependent on accurate knowledge of attitude, the pointing data may be pre-calculated or even expressed in terms of an expression defining the relationship which can be propagated within the ISL terminal controller. This substantially reduces the constraints on the spacecraft computer and on-board attitude and position sensors. The uncertainty can be further reduced if all spacecraft have location determining sensors such as GPS or have accurate ground tracking data. By sharing the orbital data across the ISL links already established, the uncertainty due to location and velocity errors can be minimized.

In addition to the above, it should be noted further that spacecraft 48 does not need to establish any ISL connections in order to be acquired, since it views the full field of uncertainty at all times. Hence, once a small number of spacecraft (2 to 3) in the constellation have ISL links established, these spacecraft can always be used in the scanning mode in any acquisition process with the next spacecraft out, exploiting the above method of providing acquisition pointing data. In this way, only the first few spacecraft connected in a constellation will require open-loop acquisition per the traditional approach. Since the acquisition time is generally immaterial during the initial phases of populating the constellation, these initial connections will not be allowed to constrain the requirements on the spacecraft and terminal.

Further, since the field of uncertainty is significantly reduced with the present method for the ISL terminals on spacecraft 42 once initial links have been established, it allows the possibility that the acquisition process can be modified to reduce ISL terminal complexity. In this modified version of the acquisition process previously described, the ISL terminal on the first spacecraft scans a beam over the field of uncertainty multiple times. The ISL terminal on the second spacecraft has a field of view less than the field of uncertainty, and steps this field of view over the field of uncertainty, moving once each time the first ISL terminal scans the complete field of uncertainty. The receive field of view can be sized so that it is only required to be stepped when no other ISL links are established on the same spacecraft, i.e., only for initial acquisition. The reduction on the field of view eases constraints on optics and acquisition detector size and complexity.

In a further aspect of this invention, the presence of multiple (three or more) links may be used to improve the accuracy of the knowledge of the relationships between the terminal coordinate systems and with the spacecraft coordinate system. This then leads to improved acquisition pointing knowledge when any of the terminals are required to change link connections.

In this aspect of the invention, when the system implements the attitude determination aspect of the invention, the controller first determines the attitude transform matrix **A**, updated based on measurements of all existing links and other sensors if used, as described in the first aspect of the invention. The controller then re-predict the terminal pointing vectors for all these existing links using this determined transform matrix **A** and compare these predictions with the actual terminal pointing vectors measured. The comparison differences are then used to correct the estimates of the relationships between the terminal coordinate systems and the spacecraft coordinate system.

In a similar fashion, when the system implements the link coordinate system aspect of the invention, the controller determines the link coordinate system and the predicted relationships between the link vectors for all connected links and the predicted zero angle reference vector $\vec{V}_0$. The controller also determines the actual zero angle vector, in an on-board reference coordinate system, and hence references the link coordinate system to this on-board coordinate system, by using measured link vector data. The controller then determines the angles between the measured link vectors and the actual zero angle vector. These angles are then compared to the predicted angles. The comparison differences are then used to correct the estimates of the relationships between the terminal coordinate systems.

Thus this invention, by exploiting the plurality of ISLs and spacecraft in a constellation, by providing accurate knowledge of the spacecraft orbital parameters, and by providing the capability to dynamically measure the ISL pointing vectors, permits the provision of high accuracy and stable attitude data to the spacecraft from the ISL terminals. This in turn permits the use of narrower beam primary communication antennas, stabilization of the entire spacecraft or an antenna platform, and disabling or reduced utilization of other attitude sensors on the spacecraft while the ISLs are active, thereby conserving power and/or enhancing the reliability of spacecraft attitude data. The present invention also provides: high tolerance to spacecraft attitude drifts, transients and vibrations during the acquisition process; reduced ISL requirements for attitude knowledge from the spacecraft for acquisition; reduced acquisition time for ISLs within a system containing a plurality of spacecraft linked by ISLs; and a reduction in ISL terminal complexity for acquisition.

The present invention, although described with respect to a low-Earth orbit communication constellation, is not restricted to this type of spacecraft. It can be applied in other cases, such as: long-range baseline radio or optical astronomy that uses two or more spacecraft, geostationary constellations, earth resource spacecraft, e.g., for stabilization of observing platforms with attendant advantages, and multiple use spacecraft, using communication links and astronomical or Earth observation.

As described herein above, the present invention solves many problems associated with previous systems, and presents improved performance, efficiency and reliability. However, it will be appreciated that various changes in the details, materials and arrangements of parts which have been herein described and illustrated in order to explain the nature of the invention may be made by those skilled in the art within the principle and scope of the invention as expressed in the appended claims.

**Claims**

1. A method of determining the attitude of a first spacecraft, comprising the steps of:

   calculating a predicted link vector between the first spacecraft and a second spacecraft;
   deriving a measured link vector from a link connecting said first and second spacecrafts; and
   comparing the difference in the predicted and measured link vectors to determine the attitude of the first spacecraft.

2. The method of claim 1 wherein the step of establishing a predicted link vector comprises determining the difference in predicted position coordinates between the first and at least one other spacecraft.

3. The method of claim 2 further comprising the step of providing positional data from linked spacecraft to said first spacecraft for determining the predicted position coordinates.

4. The method of claim 1 further comprising a step of referencing the predicted link vector to a spacecraft coordinate system of the first spacecraft.

5. The method of claim 4 wherein the spacecraft coordinate system is assumed to be in a known alignment with a spacecraft velocity vector, and wherein the step of referencing comprises transforming the link vector to the spacecraft coordinate system from an orbital position coordinate system.

6. The method of claim 4 wherein the predicted link vector is transformed with a transformation function having coordinates relating the range, azimuth and elevation of the second spacecraft to the first spacecraft.

7. The method of claim 6 wherein the step of comparing comprises measuring the differences in azimuth and elevation between the predicted and measured link vectors.

8. The method of claim 1 further comprising establishing a plurality of predicted and measured link vectors between a plurality of respective spacecraft, and comparing the respective predicted and measured link vectors to determine the amount of attitude offset in the first spacecraft.

9. A method of establishing open-loop pointing from a first spacecraft to a second spacecraft, comprising the steps of:

calculating a primary predicted link vector between the first spacecraft and the second spacecraft, wherein the primary predicted link vector is defined in relationship to at least one secondary predicted link vector between the first spacecraft and at least one respective other spacecraft;

deriving at least one measured link vector between the first spacecraft and the at least one respective other spacecraft; and

establishing open-loop pointing for an ISL link between the first and second spacecraft by utilizing the first predicted link vector and the at least one measured link vector.

10. The method of claim 9 wherein the step of establishing the primary predicted link vector comprises determining the difference in predicted position coordinates between the first and the at least one other spacecraft.

11. The method of claim 10 further comprising the step of providing positional data from linked spacecraft to the first spacecraft for use as the predicted position coordinates.

12. The method of claim 9 wherein the open-loop pointing further includes using a scanning beam process to acquire the second spacecraft.

13. A terminal for providing inter-satellite links between spacecraft comprising:

a mechanical interface for connecting the terminal to a spacecraft so as to provide a coordinate system to which pointing angles can be referenced;

a receive unit for recovering communication data from an incoming receive beam along an inter-satellite link with a remote terminal;

a transmit unit for emitting communication data as an outgoing transmit beam along the inter-satellite link to the remote terminal;

a steering unit for steering the incoming receive beam and an outgoing transmit beam at respective desired pointing angles referenced to the mechanical interface, so as to maintain the inter-satellite link;

a track unit for monitoring direction of incidence of the incoming receive beam;

a measurement unit for accurately measuring actual pointing angles of the steering means referenced to the mechanical interface;

a control unit for receiving data from the measurement means and comparing the data with the coordinate system to measure changes in spacecraft attitude, for controlling the steering means to correct the pointing angles to compensate for the changes in spacecraft attitude, for maintaining the inter-satellite link.

14. The terminal of claim 13 further comprising an acquisition unit for initially detecting an incoming receive beam signal from the remote terminal and determining correct pointing angles to establish an inter-satellite link;

15. The terminal of claim 13 wherein the spacecraft includes a plurality of said terminals, and wherein each of said terminals is related in position to each other and to the spacecraft coordinate system.

16. The terminal of claim 15 wherein more than one of said terminals are used to provide attitude data.

17. The terminal of claim 13 wherein the control unit comprises a microprocessor device.

18. The terminal of claim 13 wherein the steering unit comprises active optics for steering the transmit and receive beams.

19. The terminal of claim 13 wherein the terminal provides attitude data to the spacecraft that can be used to determine the attitude of the spacecraft.

20. The terminal of claim 19 wherein the supplied attitude data is used to control the attitude of the spacecraft.

21. The terminal of claim 13 wherein the terminal provides attitude data for control of a stabilized platform on a spacecraft.

Figure 1 : ISL Terminal

EP 0 949 143 A2

Figure 2 : Spacecraft Relationships

Figure 3 : Coordinate Transform Relationships

Figure 4 : Spacecraft Relationships For Acquisition

Figure 5 : Acquisition Beam and Field Relationships

Figure 6 : Definition of New Coordinate System

Figure 7 : Flowchart for Provision of Attitude Data to Spacecraft using ISL

Figure 8 : ISL Terminal Control Flowchart For Acquisition